# EUROPEAN PATENT SPECIFICATION

(11) **EP 4 023 094 B1**
(45) Date of publication and mention of the grant of the patent: **30.07.2025**
(21) Application number: 21218352.9
(22) Date of filing: 30.12.2021
(51) Int. Cl.: A43B 13/20, B29D 35/00, B29D 35/12

(54) **MOLD AND METHOD FOR PROVIDING MANUFACTURED ARTICLES AND SOLES AND CORRESPONDING MANUFACTURED ARTICLES AND SOLES OBTAINED THEREBY**
FORM UND VERFAHREN ZUR BEREITSTELLUNG VON ERZEUGNISSEN UND SOHLEN UND DADURCH ERHALTENE ERZEUGNISSE UND SOHLEN
MOULE ET PROCÉDÉ DE FOURNITURE D'ARTICLES MANUFACTURÉS ET SEMELLES ET ARTICLES FABRIQUÉS CORRESPONDANTS ET SEMELLES AINSI OBTENUES

(30) Priority: 05.01.2021 IT 202100000098
(43) Date of publication of application: 06.07.2022
(73) Proprietor: DA. MA. & Co S.r.l., 63812 Montegranaro FM (IT)
(72) Inventor: MAZZA, Emanuele, 63812 Montegranaro FM (IT)
(74) Representative: Modiano, Micaela Nadia

(56) References cited:
- WO-A1-2006/112622
- KR-A- 20040 096 914
- US-A1- 2018 009 187

## Description

The present invention relates to a mold and a molding method designed to provide generic manufactured articles made of polymeric material (for example polyolefin materials), manufactured articles among which footwear soles are quite significant.

In order to ensure maximum comfort in an item of footwear, manufacturers, especially sole manufacturers, are constantly striving to find lightweight materials and techniques that improve elastic response and reduce the mechanical stresses transmitted from the ground to the user's foot by distributing them as evenly as possible, on a surface specifically designed to cushion the impact thereof.

In order to achieve these results, expandable and cross-linkable polyolefin materials, such as for example the one commonly known as ethylene vinyl acetate (often referenced by the acronym EVA) and others having similar characteristics, are used increasingly often.

In order to achieve and increase the comfort ensured by a sole made of expanded materials (for example those mentioned in the previous paragraph), it is known to provide, in said sole, transverse grooves that allow, through an alternatedsuccession of empty spaces and regions constituted by expanded material, to calibrate the pliability and the elastic response of the sole in an optimum way.

Soles for footwear which alternate empty spaces and areas of expanded material are also known from European Patent Application 21187527.3 in the name of this same Applicant. European Patent Application 21187527.3, however, highlights a weakness in relation to the industrialization of the sole (and of the machines, plants, molds by means of which it is made) and in the method of production of the blank from which the sole will be obtained. European Patent Application 21187527.3 entails in fact, like most of the productions of a traditional sole, several steps after the molding step, which must be performed before it is possible to assemble the upper on said sole. In particular, footwear manufacturers generally require the interposition of a lamina between the sole and the upper (as also provided in European Patent Application 21187527.3), in order to have a sufficiently large and uniform surface to firmly glue the upper to the sole. Said lamina can be made of various materials and entails auxiliary processes (cutting of the lamina, its stable gluing to the sole) that make the production process long, cumbersome and expensive with obvious drawbacks (risks related to the poor strength of the coupling, reduction of flexibility and softness).

The technical principle and the associated problems highlighted for footwear soles can be combined identically with the production of other manufactured articles in which the teachings of European Patent Application 21187527.3 can be applied. Consider, for example, any fitness mats (for free exercises) made of expandable and cross-linkable polyolefin materials, or seats for chairs, covers for equipment that comes into contact with the body, etcetera. In these cases also, elastic response and comfort are the goals pursued and transverse grooves, while giving the necessary softness, would still be uncomfortable (a discontinuous supporting surface) and would create discomfort in the part of the body that rests thereon. Therefore, even in these additional manufactured articles it would be necessary to have a lamina interposed between the surface provided with the grooves and the body of the user in order to optimize comfort and maximize the elastic effect. It is evident, in this case also, that the application of the lamina of any material would determine the same drawbacks described above in relation to footwear.

Document US 2018/009187 A too discloses a mould and a method for moulding footwear articles according to the state of the art.

The aim of the present invention is to solve the problems described above, devising a mold for providing manufactured articles and soles that allows to provide a manufactured article that is substantially ready for the specific application without the need for additional operations and/or additional components.

Within this aim, an object of the invention is to devise a method for molding manufactured articles and soles that allows to provide a manufactured article that is substantially ready for the specific application without requiring additional operations and/or additional components.

Another object of the invention is to devise a mold for providing manufactured articles and soles that is constituted by a limited number of strong components.

Another object of the invention is to devise a mold for providing manufactured articles and soles which is constituted by components that can be coupled easily and intuitively.

Another object of the invention is to devise a method for molding manufactured articles and soles which does not comprises complex steps.

Another object of the invention is to devise a method for molding manufactured articles and soles that can be automated easily.

Another object of the invention is to provide a manufactured article which is suitable to be used directly in its own predefined application without the need for additional processes and/or additional components.

Another object of the invention is to provide a sole which is suitable to be mounted directly in a respective item of footwear without the need for additional processes and/or additional components.

A further object of the present invention is to provide a mold and a method for providing manufactured articles and soles, as well as a manufactured article and/or a sole, which have low costs, are relatively easy to provide and are of assured application.

This aim and these and other objects that will become better apparent hereinafter are achieved by a mold for providing manufactured articles and soles as defined in claim 1.

This aim and these and other objects are also achieved by means of a method for providing manufactured articles and soles as defined in claim 6.

Further characteristics and advantages of the invention will become better apparent from the description of a preferred but not exclusive embodiment of the mold and of the method for providing manufactured articles and soles, as well as of the manufactured article and sole, illustrated by way of non-limiting example in the accompanying drawings, wherein:

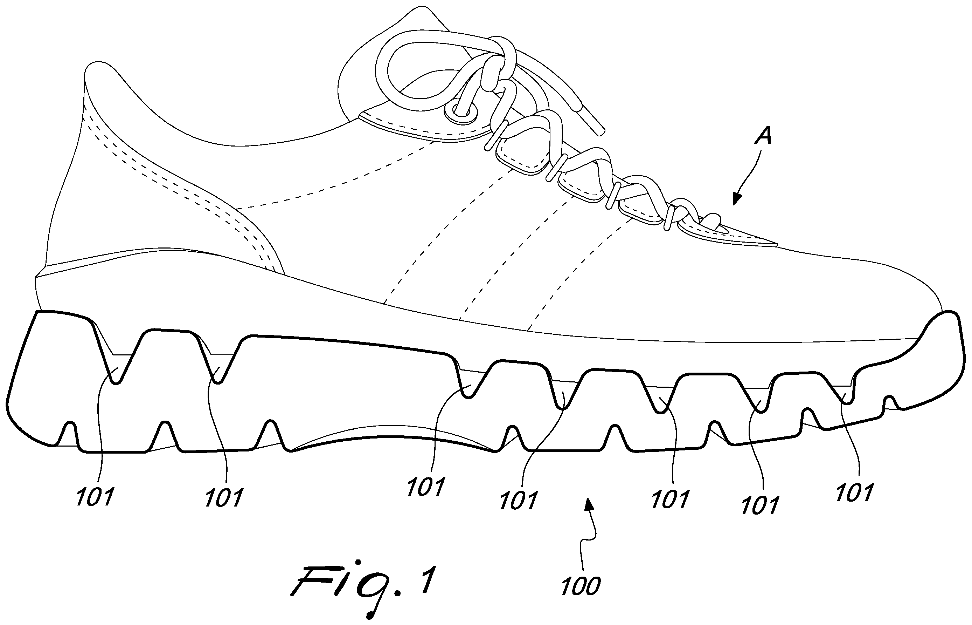

Figure 1 is a schematic side view of an embodiment of an item of footwear provided with a version of the sole according to the invention;

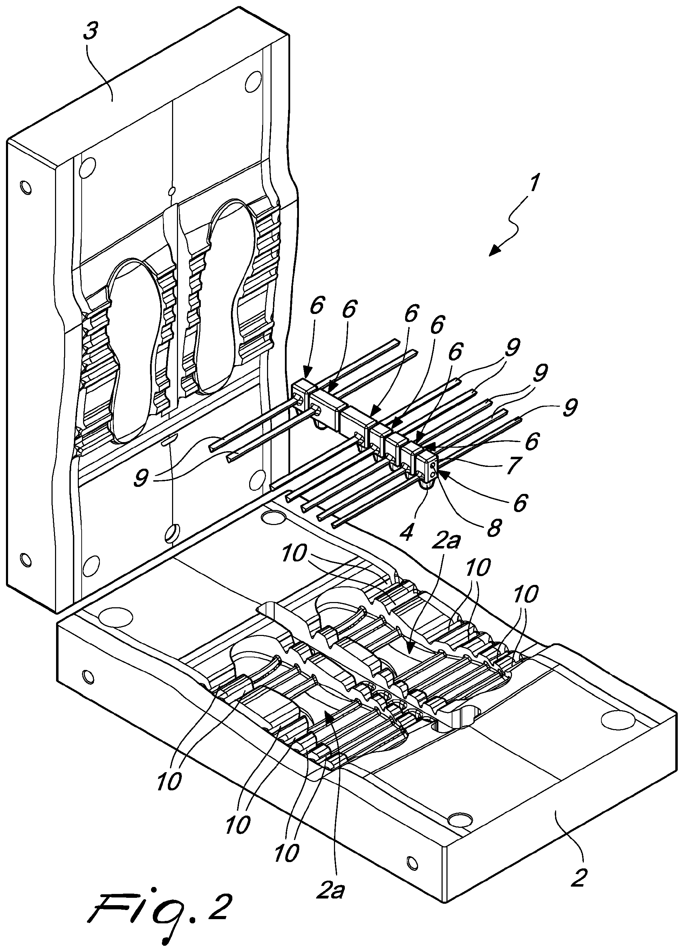

Figure 2 is a schematic exploded perspective view of a mold for providing manufactured articles and soles according to the invention;

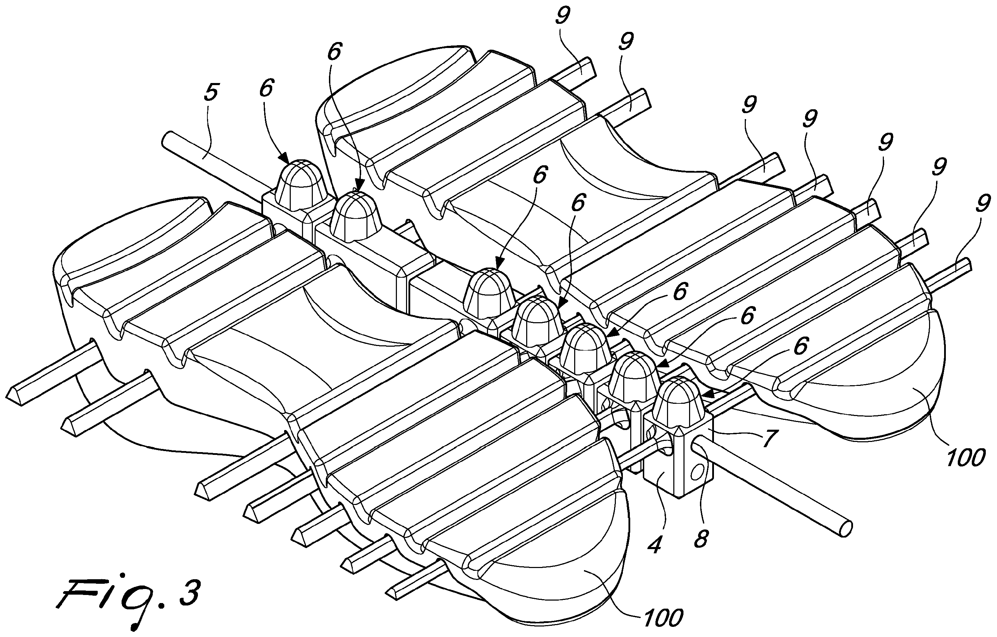

Figure 3 is a schematic perspective view of a pair of soles, during their production, coupled to an insert of a mold according to the invention.

With particular reference to the figures, a mold for providing manufactured articles and soles 100 according to the invention is generally designated by the reference numeral 1.

The mold 1 according to the invention comprises at least one lower mold part 2, at least one upper mold part 3, which are mutually complementary, and at least one insert 4.

The lower mold part 2 and the upper mold part 3 comprise a respective internal recess 2a, 3a; when the two mold parts 2 and 3 are mutually juxtaposed, they delimit an internal cavity which corresponds to the volume of the two opposite recesses 2a, 3a. The internal cavity is actually slightly smaller than the sum of the volumes of the two recesses 2a and 3a because inside it, in the configuration for use, there is also the insert 4: due to the particular shape of the two recesses 2a and 3a and to the presence of the insert 4, the internal cavity is contoured, having the shape and dimensions correlated with those of the manufactured article to be provided (for example correlated with those of the sole 100).

With particular reference to an innovation of considerable interest in practice and in application, the insert 4 can advantageously comprise at least one rail 5 and at least two sliders 6 which can slide on said rail 5.

Each slider 6 comprises conveniently a main body 7 provided with a seat 8 for the sliding accommodation of the at least one respective rail 5 and at least one elongated protruding prong 9.

In the mutual mating configuration, the rail 5 and at least one portion of the main bodies 7 of the sliders 6 are external to the mold parts 2, 3 while the prongs 9 are advantageously inserted in the contoured cavity through respective openings 10 formed along the edge of the mold parts 2, 3.

With particular reference to an embodiment of unquestionable interest in practice and in application, the sliders 6 may be advantageously a plurality: the prong 9 of each slider 6 is conveniently insertable within the contoured cavity, formed by the recesses 2a and 3a as a consequence of the mating of the lower mold part 2 and of the upper mold part 3; each prong 9 reaches the inside of the cavity through a respective opening 10 formed along a corresponding lateral edge of the mold parts 2, 3.

It is specified, moreover, that the main bodies 7 of the sliders 6 may validly have a shape and dimensions suitable, at a gathered configuration thereof, for the perfect alignment of the prongs 9 which are integral therewith with the corresponding lateral openings 10 of the mold parts 2, 3.

It is specified that the gathered configuration of the main bodies 7 may be conveniently determined by the abutment of a lateral face of each main body 7 against a corresponding face of the contiguous main body 7. In this manner the bodies 7 are arranged side by side, with the lateral surfaces mutually juxtaposed in an arrangement of minimum longitudinal space occupation (the term longitudinal refers to the direction of the axis of the rail 5 and of the corresponding seats 8 that accommodate it slidingly).

Furthermore, it is specified that each prong 9 of each slider 6 can positively have a cross-section with a shape that is chosen from polygonal, mixed-line, circular, elliptical, resembling a predefined shape, and the like.

In practice, each prong 9, once extracted from the manufactured article (sole 100), leaves in said manufactured article a hole (corresponding to the volume previously occupied by the prong 9) which will have the same shape as the prong 9.

In fact, during the injection of the polymer inside the cavity formed by the two mold parts 2 and 3 the polymer occupies the entire space available, except for the volume occupied by the prongs 9.

It is therefore possible to provide holes (generally transverse through channels) in the manufactured article which modify its mechanical behavior and particularly its deformability following compression.

If the manufactured article is a sole 100, the transverse through channels generated by the prongs 9 are distributed so as to make softer the portions subjected to a low load and make stronger the parts under the forefoot and/or the heel, which instead have to bear considerable and potentially even impulsive loads (to increase the comfort of the item of footwear associated with said soles 100).

The shape of the outline of the prongs 9 is fundamental to obtain specific mechanical behaviors: a prong 9 with a triangular cross-section with a vertex directed toward the top of the sole 100 ensures a progressive localized pliability upon compression of said sole 100; a prong 9 with a circular cross-section ensures a localized pliability with a substantially sinusoidal trend; a prong 9 with a square cross-section ensures a constant localized pliability of the sole 100.

By selecting specific geometric shapes of the prongs 9, associated with predefined prong dimensions, it is possible to predefine the mechanical behavior of the sole 100 under compression.

Moreover, the selection of fancy shapes for the cross-section of the prongs 9, such as a heart, a flower, a wave, an animal outline, allow a very high level of customization of the soles 100, while achieving the goal of giving them an ideal mechanical response to compression.

It is not excluded to use shapes, for the prongs 9, that may resemble characters of comics or fairy tales or television series, in order to create lines of shoes dedicated to them which are equipped with their respective soles 100; likewise, the provision of soles 100 with transverse through channels having a cross-section that resembles Christmas trees and other traditional symbols associated with civil and/or religious holidays is provided.

All the embodiments described in the last paragraph are particularly interesting for providing soles 100 for footwear intended for children.

It is specified that, with particular reference to a particularly effective embodiment, the rail 5 may conveniently be longer than the sum of the lengths of the main bodies 7 that are present thereon, for the free sliding of the sliders 6 along said rail 5 and their respective mutual spacing.

As will be seen hereinafter, since the injection of a polymer designed to expand is generally provided (expanded polymers, by incorporating gas cells inside them, ensure a better elastic response and a compression pliability that makes them preferable in all cases in which the manufactured article is designed to constitute a supporting surface for a person), when the manufactured article is extracted from the cavity (following the mutual spacing of the two mold parts 2 and 3) a first uncontrolled expansion of said manufactured article occurs (due to the expansion of the gas contained inside the polymer mass), followed by a slow contraction (during the cooling of the gases) until the design dimensions provided for the manufactured article are reached.

In the uncontrolled expansion step immediately following the extraction of the manufactured article from the mold 1, it is fundamental that the sliders 6 can slide freely on the rail 5, moving mutually apart: this sliding allows the retention of the correct shape (and dimensions as well) of the holes occupied by the prongs 9 and ensures (due to the mutual alignment of the sliders 6 ensured by the rail 5 and by the shape of the seats 8 of the main bodies 7) that the transverse channels formed by the various prongs 9 remain correctly aligned with each other.

The present invention extends its protection also to a method for providing manufactured articles and soles 100 which entails the execution of a sequence of consecutive steps.

During a first step, a lower mold part 2 and an upper mold part 3 of a mold 1 mate in order to form a contoured internal cavity the shape and dimensions of which are correlated with those of the manufactured article to be provided (be it a generic manufactured article and/or a sole 100).

In a subsequent step it is necessary to insert at least one respective prong 9 in the internal cavity through at least one lateral opening 8 of at least one of the mold parts 2, 3,.

The opening 8 may be arranged on both sides of the mold 1, so as to allow the full crossing of the mold 1 by the prong 9 (so as to generate a transverse through channel in the manufactured article).

Then one proceeds to the heating, in a subsequent step, of the mold parts 2, 3 and of the at least one prong 9 to a predefined temperature.

Once the correct temperature of the previously cited components is reached, in a subsequent step one proceeds to inject a polymeric mixture inside the cavity. The temperature to which the mold parts 2, 3 and the prong 9 have been heated is not lower than the cross-linking start temperature of the polymeric mixture.

After injection there is a substantially static step, i.e., in which it is necessary to wait for a predefined time in order to allow the cross-linking and at least partially the expansion of the polymeric mixture inside the cavity.

After the predefined time has elapsed, a step of separation of the upper mold part 3 from the lower mold part 2 can then be started by extracting the manufactured article (or sole 100) and allowing its free expansion in the atmosphere for a predefined time.

During this step there is a great expansion of the manufactured article (even far beyond the final dimensions intended in the design): this uncontrolled expansion is due to the presence of numerous inclusions of gas (confined within closed cells present in the polymer) which, being at high temperature and no longer constrained by the rigid shapes of the mold 1, increase in volume considerably.

Subsequent cooling of the manufactured article (left at room temperature) leads to a dimensional contraction of said manufactured article, which stabilizes its final dimensions at the design dimensions.

During this step in which the uncontrolled expansion of the manufactured article and its subsequent contraction to the dimensions intended by the design occurs, the prong 9 remains inserted inside said manufactured article, so as to maintain the shape and dimensions of the transverse channel within which it is accommodated.

A subsequent step provides for the extraction of the at least one prong 9 from the manufactured article, with consequent retention, in said manufactured article, of a channel (the transverse channel, which may also be a through channel) at the space previously occupied by said prong 9.

In this manner, the manufactured article is substantially equivalent to a traditional manufactured article obtained by molding with the same polymeric mixture, with the difference of providing a transverse through channel which modifies locally its compression pliability.

With particular reference to the method that is particularly efficient and suitable for the production of manufactured articles and/or soles 100 with high quality standards, it is specified that the prongs 9 may advantageously be a plurality, mutually interconnected by means of a mutual alignment rail 5 on which the prongs can slide freely (for example through respective end portions constituted by a main body 7 provided with a through seat 8 within which the rail 5 is slidingly accommodated). By virtue of the presence of the rail 5, the insertion of the prongs 9 in the internal cavity of the mold 1 through the respective openings 10 is simultaneous.

Furthermore, the rail 5 helps to maintain the correct alignment among the prongs 9, so that the transverse channels that they generate in the manufactured article correspond perfectly to the design specifications.

The free sliding of the prongs 9 on the rail 5 is extremely important, since in this step the expanding material is very delicate and any hindrance to its free expansion would damage its shape.

It is specified that preferably the mold parts 2, 3 and the at least one prong 9, during the molding operations, can be conveniently kept at a temperature comprised between 100°C and 250°C.

The selection of the temperature is linked to the type of polymeric mixture used.

If ethylene vinyl acetate is used (polyethylene vinyl acetate, EVA in acronym), the temperature to which the components are to be brought is higher than 140°C.

Moreover, it is specified that the mold parts 2, 3 and the at least one prong 9, prior to mutual mating and prior to the molding operations, may advantageously be preheated to a temperature comprised between 100°C and 250°C.

The present invention extends its protection also to any manufactured article made of polymeric material that comprises at least one main element having predefined shape and dimensions, provided with at least one hollow through channel 101.

It is specified that in a specific embodiment of undeniable interest in application, the manufactured article may be constituted by a sole 100 and the main element is therefore a portion of said sole for items of footwear, while the hollow through channels 101 are a plurality, with consequent variation of the compression pliability of said sole 100.

The mold 1 and the method according to the invention allow:
- to provide transverse through channels 101 which cross said manufactured article (although it is not excluded to provide channels with a longitudinal or different direction), thus contributing to optimize the physical-mechanic characteristics of light weight, extreme flexibility and elasticity of the obtained manufactured article;
- to provide manufactured articles of any type (soles 100, mats, etcetera) with transverse channels and through holes made integrally with expandable and cross-linkable polyolefin materials (EVA), which do not need additional steps for the application of a lamina in order to allow the correct gluing of an upper (in the case of the sole 100), or objects of other type, onto said manufactured articles;
- to provide an efficient production method for molding said manufactured articles (soles 100, mats, etcetera) with through channels 101 made entirely of EVA;
- to facilitate the production of said manufactured articles, by significantly simplifying their logistics. In fact, the need to resort to processes carried out by external suppliers (and also the associated movements necessary for the transfer of the blanks), previously necessary for the gluing of the manufactured articles, is eliminated;
- to optimize the manufacturing times of said manufactured articles, by lowering their production times and reducing to zero the times of subsequent processes;
- to reduce production costs, by avoiding the production of the additional laminas (the manufactured article according to the invention leaves the mold already complete) and their gluing to the manufactured article;
- to eliminate the use of adhesives and solvents in order to produce said manufactured article;
- to completely avoid the risks of failure, or partial failure, of the adhesive bonding between the laminas and the manufactured articles, due to accidental errors that may occur either in the many steps required by the adhesive bonding or in the unforeseen chemical and physical reactions between the manufactured article made of EVA material and the various types of material that can be used to provide the lamina;
- to consequently decrease the environmental impact entailed by the production of manufactured articles by avoiding the use of adhesives and solvents, and optimizing transport.

Advantageously, the present invention solves the problems described above, devising a mold 1 for providing manufactured articles and soles 100 that allows to provide a manufactured article (or a sole 100) that is substantially ready for the specific application without requiring additional operations and/or additional components.

In fact, the manufactured article does not need the adhesive bonding of additional flaps made of polymeric or other material, nor it is necessary to perform machining processes in order to provide the transverse through channels 101.

Conveniently, the method for molding manufactured articles and soles 100 according to the invention allows to provide a manufactured article that is substantially ready for the specific application without requiring additional operations and/or additional components.

Favorably, the mold 1 according to the invention is constituted by a limited number of strong components: the mold is therefore solid and scarcely prone to breakages and/or failures.

Positively, the mold 1 according to the invention is constituted by components that can be coupled easily and intuitively.

Usefully, the method for molding according to the invention does not comprise complex steps.

Efficiently, the method for molding according to the invention can be automated easily.

Effectively, the manufactured article according to the invention is suitable to be used directly in its own predefined application without the need for additional processes and/or additional components.

Advantageously, the sole 100 according to the invention is suitable to be mounted directly in a respective item of footwear without the need for additional processing and/or additional components.

Validly, the mold 1 and the method for providing manufactured articles and soles 100, as well as the manufactured article and/or the sole 100 according to the invention, are relatively easy to provide in practice and have low costs: these characteristics make the mold 1, the method, the manufactured article and the sole 100 according to the invention innovations of assured application.

The invention thus conceived is susceptible of numerous modifications and variations, all of which are within the scope of the accompanying claims; all the details may furthermore be replaced with other technically equivalent elements.

In the examples of embodiment shown, individual characteristics, given in relation to specific examples, may actually be interchanged with other different characteristics that exist in other examples of embodiment.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mold for providing manufactured articles and soles (100), of the type comprising at least one lower mold part (2), at least one upper mold part (3) which are mutually complementary and at least one insert (4), said lower mold part (2), said upper mold part (3) and said insert (4) forming, in the mutual mating configuration, a contoured cavity the shape and dimensions of which are correlated with those of the article to be provided, **characterized in that** said insert (4) comprises at least one rail (5) and at least two sliders (6) which can slide on said rail (5), each said slider (6) comprising a main body (7) provided with a seat (8) for the sliding accommodation of the at least one respective rail (5) and at least one elongated protruding prong (9), in said mutual mating configuration said rail (5) and at least one portion of said main bodies (7) of said sliders (6) being external to said mold parts (2, 3) and said prongs (9) being inserted in said contoured cavity through respective openings (10) formed along the edge of said mold parts (2, 3).

2. The mold according to claim 1, **characterized in that** said sliders (6) are a plurality, the prong (9) of each slider (6) being insertable within said contoured cavity, formed with the mating of said lower mold part (2) and said upper mold part (3), each prong (9) reaching said cavity through a respective opening (10) formed along a corresponding lateral edge of said mold parts (2, 3).

3. The mold according to claim 1, **characterized in that** said main bodies (7) of said sliders (6) have a shape and dimensions suitable, at a gathered configuration, for the perfect alignment of the prongs (9) which are integral therewith with the corresponding lateral openings (10) of said mold parts (2, 3), said gathered configuration of said main bodies (7) being determined by the abutment of a lateral face of each main body (7) on a corresponding face of the contiguous main body (7).

4. The mold according to claim 1, **characterized in that** each prong (9) of each slider (6) has a cross-section with a shape that is chosen from polygonal, mixed-line, circular, elliptical, resembling a predefined shape, and the like.

5. The mold according to claim 1, **characterized in that** said rail (5) is longer than the sum of the lengths of said main bodies (7) that are present thereon, for the free sliding of said sliders (6) along said rail (5) and their respective mutual spacing.

6. A method for providing manufactured articles and soles (100), which consists in
- mating a lower mold part (2), an upper mold part (3) and an insert (4) of a mold (1) in order to form, in the mutual mating configuration, a contoured internal cavity the shape and dimensions of which are correlated with those of the manufactured article to be provided, said insert (4) comprising at least one rail (5) and at least two sliders (6) which can slide on said rail (5), each said slider (6) comprising a main body (7) provided with a seat (8) for the sliding accommodation of the at least one respective rail (5) and at least one elongated protruding prong (9), in said mutual mating configuration said rail (5) and at least one portion of said main bodies (7) of said sliders (6) being external to said mold parts (2, 3);
- inserting, through at least one lateral opening (10) of at least one of said mold parts (2, 3), the at least one respective prong (9) in said internal cavity;
- bringing said mold parts (2, 3) and the at least one prong (9) to a predefined temperature;
- injecting a polymeric mixture into said cavity;
- waiting for a predefined time in order to at least partially allow the expansion and cross-linking of said polymeric mixture;
- separating said upper mold part (3) from said lower mold part (2), extracting said manufactured article or sole (100) and allowing its free expansion in the atmosphere for a predefined time;
- extracting the at least one said prong (9) from said manufactured article, with consequent permanence, in said manufactured article, of a channel (101) at the space previously occupied by said prong (9).

7. The method according to the preceding claim, **characterized in that** said prongs (9) are a plurality, mutually interconnected by means of a mutual alignment rail (5) on which the prongs (9) can slide freely, said insertion of said prongs (9) in said cavity through the respective openings (10) being simultaneous.

8. The method according to claim 6, **characterized in that** said mold parts (2, 3) and said at least one prong (9), during the molding operations, are kept at a temperature comprised between 100°C and 250°C.

9. The method according to claim 6, **characterized in that** said mold parts (2, 3) and said at least one prong (9), prior to mutual mating and prior to the molding operations, are preheated to a temperature comprised between 100°C and 250°C.

## Patentansprüche

1. Form zum Herstellen von Fertigartikeln und Sohlen (100), mit mindestens einem unteren Formteil (2), mindestens einem oberen Formteil (3), die zueinander komplementär sind, und mindestens einem Einsatz (4), wobei das untere Formteil (2), das obere Formteil (3) und der Einsatz (4) in der zueinander passenden Konfiguration einen konturierten Hohlraum bilden, dessen Form und Abmessungen mit denen des herzustellenden Artikels korrelieren, **dadurch gekennzeichnet, dass** der Einsatz (4) mindestens eine Schiene (5) und mindestens zwei auf dieser Schiene (5) verschiebbare Gleiter (6) umfasst, wobei jeder Gleiter (6) einen Hauptkörper (7) mit einer Aufnahme (8) für die verschiebbare Aufnahme der mindestens einen jeweiligen Schiene (5) und mindestens einen längliche, vorstehende Zinke (9) umfasst, wobei in der gegenseitigen Passkonfiguration die Schiene (5) und mindestens ein Teil der Hauptkörper (7) der Gleiter (6) außerhalb der Formteile (2, 3) liegen und die Zinken (9) durch entsprechende Öffnungen (10), die entlang der Kante der Formteile (2, 3) ausgebildet sind, in den konturierten Hohlraum eingeführt sind.

2. Form gemäß Anspruch 1, **dadurch gekennzeichnet, dass** die Gleiter (6) mehrere sind, wobei die Zinke (9) jedes Gleiters (6) in den konturierten Hohlraum einführbar ist, der durch das Zusammenpassen des unteren Formteils (2) und des oberen Formteils (3) gebildet ist, wobei jede Zinke (9) den Hohlraum durch eine entsprechende Öffnung (10) erreicht, die entlang einer entsprechenden Seitenkante der Formteile (2, 3) ausgebildet ist.

3. Form gemäß Anspruch 1, **dadurch gekennzeichnet, dass** die Hauptkörper (7) der Gleiter (6) eine Form und Abmessungen aufweisen, die in einer zusammengefassten Konfiguration für die perfekte Ausrichtung der mit ihnen einstückigen Zinken (9) mit den entsprechenden seitlichen Öffnungen (10) der Formteile (2, 3) geeignet sind, wobei die zusammengeschobene Konfiguration der Hauptkörper (7) durch das Aneinanderstoßen einer Seitenfläche jedes Hauptkörpers (7) an einer entsprechenden Fläche des benachbarten Hauptkörpers (7) bestimmt wird.

4. Form gemäß Anspruch 1, **dadurch gekennzeichnet, dass** jede Zinke (9) jedes Gleiters (6) einen Querschnitt mit einer Form aufweist, die aus polygonal, gemischtlinig, kreisförmig, elliptisch, einer vordefinierten Form ähnlich und dergleichen ausgewählt ist.

5. Form gemäß Anspruch 1, **dadurch gekennzeichnet, dass** die Schiene (5) länger ist als die Summe der Längen der daran vorhandenen Hauptkörper (7), um ein freies Gleiten der Gleiter (6) entlang der Schiene (5) und ihren jeweiligen gegenseitigen Abstand zu gewährleisten.

6. Verfahren zur Herstellung von Fertigartikeln und Sohlen (100), das darin besteht, dass ein unteres Formteil (2), ein oberes Formteil (3) und ein Einsatz (4) einer Form (1) so zusammengefügt werden, dass in der gegenseitigen Passkonfiguration ein konturierter Innenhohlraum entsteht, dessen Form und Abmessungen mit denen des herzustellenden Fertigartikels korrelieren, wobei der Einsatz (4) mindestens eine Schiene (5) und mindestens zwei Gleiter (6) umfasst, die auf der Schiene (5) gleiten können, wobei jeder Gleiter (6) einen Hauptkörper (7) mit einer Aufnahme (8) für die gleitende Aufnahme der mindestens einen jeweiligen Schiene (5) und mindestens eine längliche vorstehende Zinke (9) umfasst, wobei in der gegenseitigen Passkonfiguration die Schiene (5) und mindestens ein Teil der Hauptkörper (7) der Gleiter (6) außerhalb der Formteile (2, 3) liegen;
- Einführen der mindestens einen entsprechenden Zinke (9) durch mindestens eine seitliche Öffnung (10) mindestens eines der Formteile (2, 3) in den inneren Hohlraum;
- Bringen der Formteile (2, 3) und der mindestens einen Zinke (9) auf eine vordefinierte Temperatur;
- Einspritzen einer Polymermischung in den Hohlraum;
- Abwarten einer vordefinierten Zeit, um die Ausdehnung und Vernetzung der Polymermischung zumindest teilweise zu ermöglichen;
- Trennen des oberen Formteils (3) vom unteren Formteil (2), Entnehmen des hergestellten Artikels oder der Sohle (100) und Freigeben dieser zur freien Ausdehnung in der Atmosphäre für eine vordefinierte Zeit;
- Entnehmen des mindestens einen Zinke (9) aus dem hergestellten Artikel, wobei in dem hergestellten Artikel an der Stelle, die zuvor von der Zinke (9) eingenommen wurde, ein Kanal (101) verbleibt.

7. Verfahren nach dem vorstehenden Anspruch, **dadurch gekennzeichnet, dass** die Zinken (9) mehrere sind, die mittels einer gemeinsamen Ausrichtungsschiene (5), auf der die Zinken (9) frei gleiten können, miteinander verbunden sind, wobei das Einführen der Zinken (9) in den Hohlraum durch die jeweiligen Öffnungen (10) gleichzeitig erfolgt.

8. Verfahren nach Anspruch 6, **dadurch gekennzeichnet, dass** die Formteile (2, 3) und die mindestens eine Zinke (9) während der Formvorgänge auf einer Temperatur zwischen 100 °C und 250 °C gehalten werden.

9. Verfahren nach Anspruch 6, **dadurch gekennzeichnet, dass** die Formteile (2, 3) und die mindestens eine Zinke (9) vor dem gegenseitigen Zusammenfügen und vor den Formvorgängen auf eine Temperatur zwischen 100 °C und 250 °C vorgewärmt werden.

## Revendications

1. Moule pour la fabrication d'articles et de semelles (100), du type comprenant au moins une partie inférieure de moule (2), au moins une partie supérieure de moule (3) qui sont mutuellement complémentaires et au moins un insert (4), ladite partie inférieure de moule (2), ladite partie supérieure de moule (3) et ledit insert (4) formant, dans la configuration d'accouplement mutuel, une cavité profilée dont la forme et les dimensions sont corrélées à celles de l'article à fournir, **caractérisé en ce que** ledit insert (4) comprend au moins un rail (5) et au moins deux coulisseaux (6) qui peuvent coulisser sur ledit rail (5), chaque coulisseau (6) comprenant un corps principal (7) muni d'un siège (8) pour le logement coulissant du au moins un rail respectif (5) et au moins une dent saillante allongée (9), dans ladite configuration d'accouplement mutuel, ledit rail (5) et au moins une partie desdits corps principaux (7) desdits coulisseaux (6) étant externes auxdites parties de moule (2, 3) et lesdites dents (9) étant insérées dans ladite cavité profilée à travers des ouvertures respectives (10) formées le long du bord desdites parties de moule (2, 3).

2. Moule selon la revendication 1, **caractérisé en ce que** lesdits coulisseaux (6) sont en pluralité, la dent (9) de chaque coulisseau (6) pouvant être insérée dans ladite cavité profilée, formée par l'accouplement de ladite partie inférieure de moule (2) et de ladite partie supérieure de moule (3), chaque dent (9) atteignant ladite cavité à travers une ouverture respective (10) formée le long d'un bord latéral correspondant desdites parties de moule (2, 3).

3. Moule selon la revendication 1, **caractérisé en ce que** lesdits corps principaux (7) desdits coulisseaux (6) ont une forme et des dimensions adaptées, dans une configuration rassemblée, à l'alignement parfait des dents (9) qui sont solidaires de ceux-ci avec les ouvertures latérales correspondantes (10) desdites parties de moule (2, 3), ladite configuration rassemblée desdits corps principaux (7) étant déterminée par la butée d'une face latérale de chaque corps principal (7) sur une face correspondante du corps principal contigu (7).

4. Moule selon la revendication 1, **caractérisé en ce que** chaque dent (9) de chaque coulisseau (6) présente une section transversale dont la forme est choisie parmi une forme polygonale, à lignes mixtes, circulaire, elliptique, ressemblant à une forme prédéfinie, et similaire.

5. Moule selon la revendication 1, **caractérisé en ce que** ledit rail (5) est plus long que la somme des longueurs desdits corps principaux (7) qui sont présents sur celui-ci, pour permettre le libre coulissement desdits coulisseaux (6) le long dudit rail (5) et leur espacement mutuel respectif.

6. Procédé pour fournir des articles manufacturés et des semelles (100), qui consiste à - assembler une partie inférieure de moule (2), une partie supérieure de moule (3) et un insert (4) d'un moule (1) afin de former, dans la configuration d'assemblage mutuel, une cavité interne profilée dont la forme et les dimensions sont corrélées à celles de l'article manufacturé à fournir, ledit insert (4) comprenant au moins un rail (5) et au moins deux coulisseaux (6) qui peuvent coulisser sur ledit rail (5), chaque coulisseau (6) comprenant un corps principal (7) muni d'un siège (8) pour le logement coulissant du au moins un rail respectif (5) et au moins une dent saillante allongée (9), dans ladite configuration d'accouplement mutuel, ledit rail (5) et au moins une partie desdits corps principaux (7) desdits coulisseaux (6) étant externes auxdites parties de moule (2, 3) ;
- l'insertion, à travers au moins une ouverture latérale (10) d'au moins une desdites parties de moule (2, 3), de la au moins une dent respective (9) dans ladite cavité interne
- l'amenée desdites parties de moule (2, 3) et de la au moins une dent (9) à une température prédéfinie ;
- l'injection d'un mélange polymère dans ladite cavité ;
- attendre un temps prédéfini afin de permettre au moins partiellement l'expansion et la réticulation dudit mélange polymère ;
- séparer ladite partie supérieure du moule (3) de ladite partie inférieure du moule (2), extraire ledit article fabriqué ou ladite semelle (100) et permettre son expansion libre dans l'atmosphère pendant un temps prédéfini ;
- extraire la au moins une dent (9) dudit article fabriqué, avec pour conséquence la permanence, dans ledit article fabriqué, d'un canal (101) à l'emplacement précédemment occupé par ladite dent (9).

7. Procédé selon la revendication précédente, **caractérisé en ce que** lesdites dents (9) sont en nombre multiple, reliées entre elles au moyen d'un rail d'alignement mutuel (5) sur lequel les denta (9) peuvent coulisser librement, l'insertion desdites dents (9) dans ladite cavité à travers les ouvertures respectives (10) étant simultanée.

8. Procédé selon la revendication 6, **caractérisé en ce que** lesdites parties de moule (2, 3) et ladite au moins une dent (9), pendant les opérations de moulage, sont maintenues à une température comprise entre 100 °C et 250 °C.

9. Procédé selon la revendication 6, **caractérisé en ce que** lesdites parties de moule (2, 3) et ladite au moins une dent (9), avant leur accouplement mutuel et avant les opérations de moulage, sont préchauffées à une température comprise entre 100 °C et 250 °C.
